# EUROPÄISCHE PATENTANMELDUNG

(11) **EP 2 454 975 A1**
(43) Veröffentlichungstag der Anmeldung: **23.05.2012**
(21) Anmeldenummer: 11401627.2
(22) Anmeldetag: 15.11.2011
(51) Int. Cl.: A47J 31/44, A47J 31/58

(54) **Getränkebereiter mit höhenverstellbarem Getränkeauslauf und Sicherheitsabschaltung**

(30) Priorität: 23.11.2010 DE 102010060731
(71) Anmelder: Miele & Cie. KG, 33332 Gütersloh (DE)
(72) Erfinder: Lind, Martin, 33397 Rietberg (DE)

(57) **Zusammenfassung**

Die Erfindung betrifft einen Getränkebereiter (1) mit einem Getränkeausgabebereich (2), einer Bedien- und Steuerungseinrichtung (7) zum Auslösen eines Getränkeausgabevorganges in ein im Getränkeausgabebereich (2) abgestelltes Gefäß (9), wobei der Getränkeauslauf (4) mittels Antriebsmotor in der Höhe verstellbar ausgebildet ist und in Abhängigkeit der Gefäßrandhöhe relativ zum Gefäßrand (9.1) positionierbar ist.

Um eine zusätzliche Sicherheitsabschaltung für den Antriebsmotor vorzusehen, wenn der Gefäßrand (9.1) von den Sensoren der Gefäßranderkennung nicht oder zu spät sensiert wird, weist der Getränkeauslauf eine Sicherheitseinrichtung (10) auf, welche bei Kontakt mit dem Gefäßrand (9.1) einen Sicherheitsschalter (11) zur Unterbrechung der Höhenverstellung des Getränkeauslaufs durch den Antriebsmotor betätigt.

## Beschreibung

Die Erfindung betrifft einen Getränkebereiter mit einem Getränkeausgabebereich, einer Bedien- und Steuerungseinrichtung zum Auslösen eines Getränkeausgabevorganges in ein im Getränkeausgabebereich abgestelltes Gefäß, wobei der Getränkeauslauf mittels Antriebsmotor in der Höhe verstellbar ausgebildet ist und in Abhängigkeit der Gefäßrandhöhe relativ zum Gefäßrand positionierbar ist.

Ein derartiger Getränkebereiter ist aus der DE 10 2008 029 835 A1 oder der EP 1 745 726 B1 bekannt. Die Sensoranordnung zur Gefäßranderkennung ist ortsfest mit dem bewegbaren Getränkeauslauf gekoppelt. Die Sensoranordnung ist an einem Träger angeordnet, der gemeinsam mit dem Getränkeauslauf verfahrbar ist. Der Träger ist derart ausgebildet und mit dem Getränkeauslauf gekoppelt, dass die Sensoren zur Gefäßranderkennung bei der Höhenverstellung des Getränkeauslaufs auf der Außenseite des Gefäßes verfahren.

Aus der JP 06046876 Y ist eine Abgabevorrichtung für Getränke mit einem höhenverstellbar ausgebildeten Getränkeauslauf bekannt, bei der die Position des Getränkeauslaufs in Abhängigkeit der Gefäßhöhe einstellbar ist. Die Gefäßhöhe wird über einen Sensor erfasst, der gemeinsam mit dem höhenverstellbaren Getränkeauslauf an einem Träger angeordnet ist.

Aus der DE 10 2004 050 365 A1 ist es bekannt, bei einem motorisch höhenverstellbar ausgebildeten Getränkeauslauf an dem Auslaufrohr einen Gefäßrandsensor anzuordnen. Der Gefäßrandsensor ist als Infrarotsensor ausgebildet, welcher gemeinsam mit dem Auslaufrohr nach unten fährt, bis der Gefäßrandsensor den Rand des Gefäßes erfasst und meldet.

Der Erfindung stellt sich das Problem neben der Gefäßranderkennung, durch die die Bewegung des Getränkeauslaufes gestoppt wird, wenn ein Gefäßrand erkannt wird, eine zusätzliche Sicherheitsabschaltung für den Antriebsmotor vorzusehen, wenn der Gefäßrand von den Sensoren der Gefäßranderkennung nicht oder zu spät sensiert wird.

Erfindungsgemäß wird dieses Problem durch einen Getränkebereiter mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen insbesondere darin, dass die Bewegung des Getränkeauslaufs unmittelbar bei Kontakt des Gefäßrandes mit der

Sicherheitseinrichtung am Getränkeauslauf gestoppt wird. Dadurch wird ein Umkippen des Gefäßes im Getränkeausgabebereich verhindert.

Ein Ausführungsbeispiel der Erfindung ist in den Zeichnungen rein schematisch dargestellt und wird nachfolgend näher beschrieben. Es zeigt
- Figur 1: einen erfindungsgemäßen Getränkebereiter in perspektivischer Darstellung der Frontansicht,
- Figur 2: den Getränkeauslauf 4 schematisch in der Seitenansicht in der oberen Betriebsstellung,
- Figur 3: Den Getränkeauslauf in bis auf den Gefäßrand 9.1 abgesenkter Betriebsstellung,
- Figur 4: ein erstes Ausführungsbeispiel für die Lagerung der Schaltwippe 11,
- Figur 5: den Getränkeauslauf 4 mit der Sicherheitseinrichtung 10 in der Seitenansicht im Schnitt, Schaltwippe 11 in Grundposition, Schnittlinie durch die Feder 14,
- Figur 6: den Getränkeauslauf 4 mit der Sicherheitseinrichtung 10 in der Seitenansicht im Schnitt, Schaltwippe 11 in Grundposition, Schnittlinie durch den Schaltnocken 16,
- Figur 7: ein zweites Ausführungsbeispiel für die Lagerung der Schaltwippe 11 mittels Rasthaken 17.

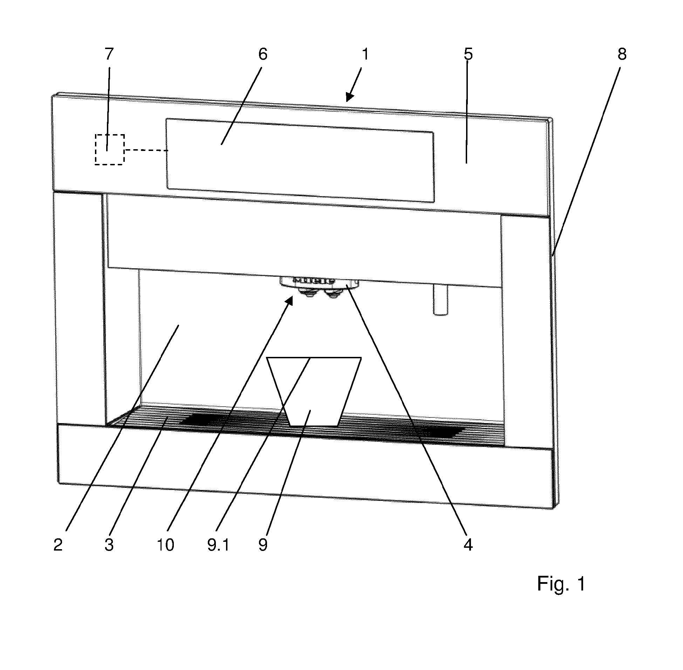

Der in Figur 1 dargestellte Getränkebereiter 1 weist einen nischenförmig ausgebildeten Getränkeausgabebereich 2 auf. Der Getränkeausgabebereich 2 wird nach unten durch eine Stellfläche 3 für Tassen, Gläser etc. begrenzt. Im oberen Bereich des Getränkeausgabebereichs 2 ist ein höhenverstellbarer Getränkeauslauf 4 angeordnet. Der hier dargestellte Getränkeauslauf 4 ist mit zwei Ausgabeöffnungen (4.1) ausgebildet. Oberhalb des Getränkeausgabebereichs 2 ist die Bedienblende 5 der Bedieneinrichtung angeordnet, die bei diesem Ausführungsbeispiel mit einer grafikfähigen Anzeige 6 ausgebildet ist. Die Bedieneinrichtung ist mit einer durch unterbrochene Linien symbolisch dargestellten Steuerungseinrichtung 7 des Getränkebereiters 1 signalübertragend verbunden. Der Getränkeauslauf 4 steht mit einer im Getränkebereiter 1 integriert angeordneten Einheit zur Zubereitung (nicht dargestellt) der Getränke in fluidleitender Verbindung. Die wesentlichen Bauteile des Getränkebereiters 1 sind bei dem dargestellten Ausführungsbeispiel hinter einer Tür 8 integriert angeordnet. Die Tür 8 schließt den nicht näher dargestellten Korpus des Getränkebereiters 1 nach vorne hin ab. In dem Korpus selbst sind beispielsweise Vorrats- und Entsorgebehälter sowie die Einheit zur Zubereitung der Getränke, z.B. eine Brüheinheit für den Kaffee, angeordnet.

In Figur 1 ist der höhenverstellbare Getränkeauslauf 4 in der obersten Betriebslage dargestellt. In dieser Lage ist es möglich, auch große Tassen zur Aufnahme von Kaffee, Milch und/oder Milchschaum unter den Getränkeauslauf 4 zu stellen. Der Getränkeauslauf 4 ist motorisch verfahrbar. Er verfährt in vertikaler Richtung in Bezug auf das auf der Stellfläche 3 positionierte Gefäß 9 wobei der Getränkeauslauf 4 in Abhängigkeit der Gefäßrandhöhe relativ zum Gefäßrand 9.1 positionierbar ist. Die Gefäßrandhöhe wird dabei von geeigneten Sensoreinrichtungen erfasst oder ist als Speicherwert in der Steuerungseinrichtung 7 hinterlegt.

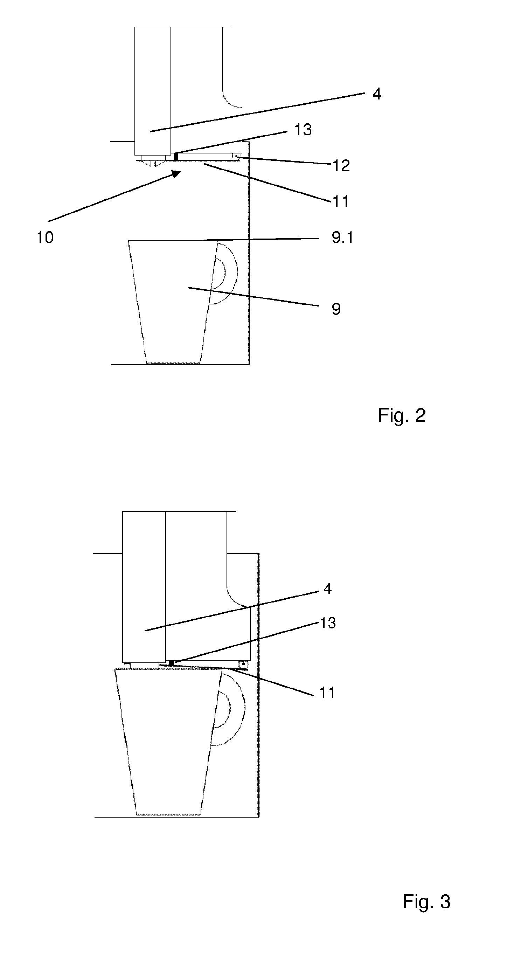

In der Figur 2 ist der Getränkeauslauf 4 sowie ein darunter abgestelltes Gefäß 9 schematisch als Einzelheit in der Seitenansicht in der oberen Betriebsstellung dargestellt. Der höhenverstellbare Getränkeauslauf 4 ist mit einer Sicherheitseinrichtung 10 ausgebildet, um sicherzustellen, dass beispielsweise bei einer Fehlfunktion der Sensoreinrichtung zur Erfassung der Gefäßrandhöhe ein Umkippen des unter dem Getränkeauslauf 4 stehenden Gefäßes 9 vermieden wird. Dazu ist an dem Getränkeauslauf 4 eine Schaltwippe 11 angeordnet, die in mindestens einer Lagerstelle 12 schwenk- oder kippbar gelagert ist und einen Sicherheitsschalter 13 bei Kontakt mit dem Gefäßrand 9.1 betätigt (siehe Figur 3).

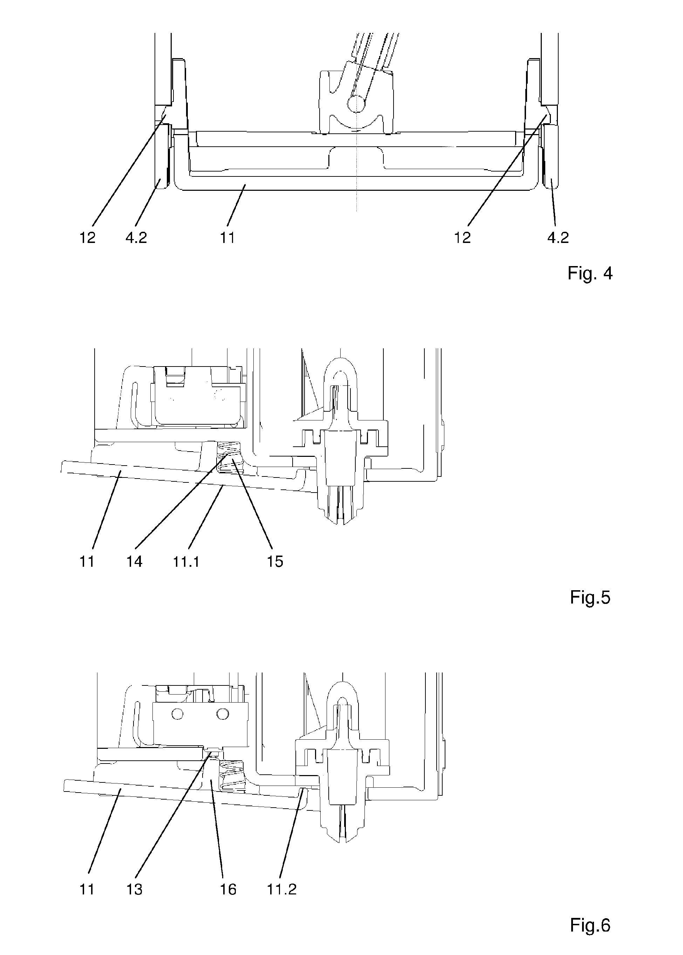

In der Figur 4 ist ein erstes Ausführungsbeispiel der Sicherheitseinrichtung 10 gezeigt. Die Sicherheitseinrichtung 10 umfasst eine federbelastete Schaltwippe 11, die schwenkbar am Getränkeauslauf 4 gelagert ist. Bei dem hier dargestellten Ausführungsbeispiel weist der Getränkeauslauf 4 zwei gegenüberliegende Lagerstellen 12 für die Aufnahme der Schaltwippe 11 in zwei Drehpunkten auf. Je nach konstruktiver Gestaltung des Getränkeauslaufs 4 und der Sicherheitseinrichtung 10 ist die Aufnahme der Schaltwippe 11 auch in nur einem Drehpunkt möglich. Die Schaltwippe 11 ist vorzugsweise derart dimensioniert, dass sie die Unterseite des Getränkeauslaufs 4 annähernd überdeckt (siehe auch Figur 5). So ist gewährleistet, dass auch ein nicht korrekt bzw. außermittig abgestelltes Gefäß 9 bei der Bewegung des Getränkeauslaufs 4 in Kontakt mit der Schaltwippe 11 der Sicherheitseinrichtung 10 gelangt. Die Schaltwippe 11 weist eine Schaltfläche 11.1 auf, die die Ausgabeöffnungen 4.1 des Getränkeauslaufs 4 in Teilbereichen umschließt und bei Kontakt mit dem Gefäßrand 9.1 einen Sicherheitsschalter 13 (siehe Figur 6) zur Unterbrechung der Höhenverstellung des Getränkeauslaufs 4 durch den Antriebsmotor betätigt. Die Schaltfläche 11.1 ist mit einem zur Frontseite und zu den Seiten des Getränkeausgebebereichs 2 gerichteten hochgezogenem Rand 11.2 (siehe auch Figur 6) ausgebildet, der eine Sicht auf die Bauteile hinter der Schaltfläche 11.1 verhindert und gleichzeitig als Spritzschutz für die Bauteile dient. In dem hochgezogenen Rand 11.2 sind vorzugsweise die gegenüberliegenden Lagerstellen 12 für die Aufnahme der Schaltwippe in zwei Drehpunkten am Getränkeauslauf ausgebildet (siehe Figur 4).

Bei dem in Figur 4 gezeigten Ausführungsbeispiel sind die Lagerstellen 12 der Schaltwippe 11 in dem hochgezogenen Rand 11.2 ausgebildet. Die gegenüberliegenden Lagerstellen 12 für die Aufnahme der Schaltwippe 11 sind in den seitlichen Wandabschnitten 4.2 des Getränkeauslaufs 4 angeordnet. In diesen Lagerstellen 12 ist die Schaltwippe 11 schwenkbar gelagert.

Figur 5 zeigt den Getränkeauslauf 4 mit der Sicherheitseinrichtung 10 in der Seitenansicht im Schnitt, wobei die Schaltwippe 11 in Grundposition steht. Die Schaltwippe 11 wird bei diesem Ausführungsbeispiel mittels einer Feder 14 in dieser Position gehalten. Die Schaltwippe 11 weist auf der Rückseite der Schaltfläche 11.1 eine Führung für die Feder 14 auf.

Trifft die Schaltwippe 11 bei der Höhenverstellung des Getränkeauslaufs 4 auf den Gefäßrand 9.1 (siehe schematische Darstellung Figur 3), wird sie entgegen der Federkraft um den Drehpunkt nach oben bewegt (siehe Figur 5). Auf der Rückseite der Schaltfläche 11.1, bzw. auf der zum Inneren des Getränkeauslaufs 4 gerichteten Seite, ist ein Schaltnocken 16 (siehe Figur 6) angeordnet, der den Sicherheitsschalter 13 der Sicherheitseinrichtung 10 bei Kontakt der Schaltwippe 11 mit dem Gefäßrand 9.1 betätigt. Dieser sendet ein Signal zur Steuerungseinrichtung 7 wodurch die Höhenverstellung durch den Antriebsmotor stoppt.

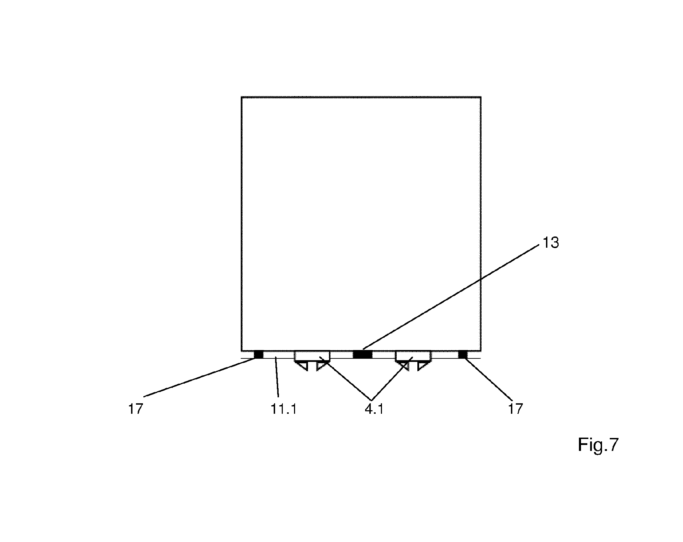

In der Figur 7 ist ein weiteres Ausführungsbeispiel für die Lagerung der Schaltwippe 11 Getränkeauslauf 4 schematisch als Einzelheit dargestellt. Die Schaltwippe ist dabei in mindestens einer Aufnahme mittels Rasthaken 17 hängend gelagert. Vorzugsweise ist eine Dreipunkt-Aufhängung vorgesehen, bei der jeder Rasthaken 17 federnd am Getränkeauslauf 4 gelagert ist. Durch diese Aufhängung ist die Schaltwippe 11 in der Ebene kippbar angeordnet. Den Rasthaken 17 ist mindestens ein Sicherheitsschalter 13 zugeordnet. Die Schaltwippe 11 umschließt die Ausgabeöffnungen 4.1 flächig bis zu den Außenrändern des Getränkeauslaufs 4.

## Patentansprüche

1. Getränkebereiter (1) mit einem Getränkeausgabebereich (2), einer Bedien- und Steuerungseinrichtung (7) zum Auslösen eines Getränkeausgabevorganges in ein im Getränkeausgabebereich (2) abgestelltes Gefäß (9), wobei der Getränkeauslauf (4) mittels Antriebsmotor in der Höhe verstellbar ausgebildet ist und in Abhängigkeit der Gefäßrandhöhe relativ zum Gefäßrand (9.1) positionierbar ist,
**dadurch gekennzeichnet,**
**dass** der Getränkeauslauf 4 eine Sicherheitseinrichtung (10) aufweist, welche bei Kontakt mit dem Gefäßrand (9.1) einen Sicherheitsschalter 13 zur Unterbrechung der Höhenverstellung des Getränkeauslaufs 4 durch den Antriebsmotor betätigt.

2. Getränkebereiter nach Anspruch 1,
**dadurch gekennzeichnet,**
**dass** die Sicherheitseinrichtung (10) eine federbelastete Schaltwippe (11) aufweist.

3. Getränkebereiter nach Anspruch 1 oder 2,
**dadurch gekennzeichnet,**
**dass** die Schaltwippe (11) am Getränkeauslauf (4) in mindestens einer Aufnahme (Lagerstelle 12) schwenkbar gelagert ist.

4. Getränkebereiter nach Anspruch 3,
**dadurch gekennzeichnet,**
**dass** der Getränkeauslauf (4) zwei gegenüberliegende Lagerstellen (12) für die Aufnahme der Schaltwippe (11) in zwei Drehpunkten aufweist.

5. Getränkebereiter nach einem der Ansprüche 1 bis 4,
**dadurch gekennzeichnet,**
**dass** die Schaltwippe (11) eine Schaltfläche (11.1) aufweist, die die Ausgabeöffnungen (4.1) des Getränkeauslaufs (4) in Teilbereichen umschließt.

6. Getränkebereiter nach Anspruch 5,
**dadurch gekennzeichnet,**
**dass** die Schaltfläche (11.1) mit einem zur Frontseite und zu den Seiten des Getränkeausgebebereichs (2) gerichteten hochgezogenen Rand (11.2) ausgebildet ist.

7. Getränkebereiter nach einem der Ansprüche 1 bis 6,
**dadurch gekennzeichnet,**
**dass** die Schaltwippe (11) auf der Rückseite der Schaltfläche (11.1) einen Schaltnocken (16) aufweist.

8. Getränkebereiter nach einem der Ansprüche 1 bis 7,
**dadurch gekennzeichnet,**
**dass** die Schaltwippe (11) auf der Rückseite der Schaltfläche (11.1) eine Führung (15) für eine Feder (14) aufweist.

9. Getränkebereiter nach Anspruch 1 oder 2,
**dadurch gekennzeichnet,**
**dass** die Schaltwippe (11) am Getränkeauslauf (4) in mindestens einer Aufnahme durch Rasthaken (17) hängend gelagert ist.

10. Getränkebereiter nach mindestens einem der vorgenannten Ansprüche,
**dadurch gekennzeichnet,**
**dass** die Schaltwippe (11) eine Schaltfläche (11.1) aufweist, die die Ausgabeöffnungen (4.1) flächig bis zu den Außenrändern des Getränkeauslaufs (4) umschließt.
